# EUROPÄISCHE PATENTSCHRIFT

(11) **EP 1 322 012 B1**
(45) Veröffentlichungstag und Bekanntmachung des Hinweises auf die Patenterteilung: **19.08.2009**
(21) Anmeldenummer: 01129394.1
(22) Anmeldetag: 18.12.2001
(51) Int. Cl.: H02G 3/10, H02B 1/04

(54) **Befestigungsanordnung zur Aufputzmontage einer Hausinstallationsschnittstelle**
Fastening arrangement for surface mounting of a domestic installation interface
Dispositif de fixation en surface d'un interface d'installation domestique

(43) Veröffentlichungstag der Anmeldung: 25.06.2003
(73) Patentinhaber: Feller AG, 8810 Horgen (CH)
(72) Erfinder: Lechner, Markus, 8038 Zürich (CH)
(74) Vertreter: Blum, Rudolf Emil

(56) Entgegenhaltungen:
- EP-A- 0 798 834
- EP-A- 1 050 939
- DE-A- 1 590 141

## Beschreibung

Die Erfindung betrifft eine Befestigungsanordnung zur Aufputzmontage einer elektrischen und/oder optischen Hausinstallationsschnittstelle an einer Wand gemäss Oberbegriff des Anspruchs.

Hausinstallationsschnittstellen (Bedienungsschnittstellen und/oder Anschlussschnittstellen) für elektrische und/oder optische Leitungen umfassen z.B. Schnittstellen (auch als Apparate bezeichnet) für Netzspannung, wie Steckdosen oder Schalter, oder für Telefon, Radio, Fernsehen und Datenleitungen. Für die sogenannte Unterputzmontage solcher Schnittstellen wird ein Einlasskasten in einer Wandausnehmung befestigt, in welchen Kasten die an die Schnittstelle, z.B. einen Lichtschalter und/oder eine Steckdose anzuschliessenden Leitungen zugeführt sind. Es ist in CH-A-585 472 oder CH-A-647 898 vorgeschlagen worden, die Apparate durch Haltefedern bzw. Spreizklammern ohne Schraubbefestigung in den Einlasskasten montierbar auszuführen.

Für die sogenannte Aufputzmontage von Apparaten andererseits werden die Leitungen mittels Installationsrohren auf dem Mauerwerk verlegt und die Apparate werden direkt auf die Wand geschraubt oder für lagegenaue Installation bevorzugt mittels eines Befestigungsbügels oder einer Befestigungsplatte an der Wand befestigt, wobei zunächst der Bügel bzw. die Platte an der Wand angeschraubt wird und nachfolgend der Apparat mit dem Bügel oder der Platte verschraubt wird. Diese letzteren Schraubverbindungen mit Gewindelöchern und kleinen Schrauben ergeben dabei einen hohen Herstell- und Montageaufwand. Eine werkzeuglose Befestigung des Apparates der Hausinstallationsschnittstelle an der Befestigungsplatte wäre daher wünschenswert. Die Haltefedern bzw. Spreizklammern der Unterputzmontage sind dafür in Ermangelung eines Einlasskastens offensichtlich ungeeignet und das Vorsehen eines Kastens auf der Wand erweist sich als aufwendig und für den Leitungsanschluss unpraktisch. CH-A-654 147 schlägt eine werkzeuglose Montage einer Aufputzsteckdose an schlecht erreichbaren Montageorten mittels Klettband oder Magneten oder mittels einer Klemmschiene vor, wobei die Klemmschiene abgewinkelte Führungen aufweist, in welche seitliche Flansche des Steckdosengehäuses eingeführt werden. Die Führungen weiten sich beim Einführen der Flansche federnd etwas auf und halten derart das Steckdosengehäuse festgeklemmt, wobei in Zugrichtung des Steckers die Abwinkelung der Führungen einen Formschluss ergibt, der die Steckdose festhält, ansonsten aber nur ein kraftschlüssiges Halten erfolgt. Eine solche Befestigung ist für eine normal zugänglichen Apparat an einer Wand, der auch für häufige Bedienung geeignet sein muss nicht verwendbar und wird daher im Stand der Technik für das Montieren von Steckdosen in Zwischenböden vorgeschlagen, wo äusserst selten ein Gebrauch der Schnittstelle durch Einstecken und Herausziehen eines Steckers erfolgt. DE-A-1 590 141 zeigt eine gattungsgemässe Befestigungsanordnung, bei welcher Federarme kombinierte Haltemittel und Rastmittel bilden. EP-A-0 798 834 zeigt eine Befestigungsanordnung für ein Gehäuse, das elektronische Bauteile enthalten kann, welche Haltemittel mit einem Schnapphaken umfasst. EP-A-1 050 939 zeigt eine Befestigungsanordndung zur Befestigung mit Werkzeug.

Der Erfindung liegt deshalb die Aufgabe zugrunde, eine Montagemöglichkeit einer Schnittstelle an einer Wand zu schaffen, die ebenfalls einen werkzeuglosen Montageschritt umfasst, aber die genannten Nachteile nicht aufweist und eine dauerhaft sichere Befestigung an der Wand ergibt und damit für allgemein zugängliche, normal benützbare Schnittstellen (Steckdosen, Schalter) gut geeignet ist.

Diese Aufgabe wird bei einer Befestigungsanordnung der eingangs genannten Art durch die kennzeichnenden Merkmale des Anspruchs 1 gelöst.

Dadurch, dass Haltemittel und separate Rastmittel vorgesehen sind, kann eine Verriegelung der Schnittstelle in ihrer Endstellung erzielt werden, was eine definierte Montageposition in der Endstellung ergibt und eine sichere Befestigung, die auch bei häufigem Gebrauch der Schnittstelle eine definierte dauerhafte Lage der Schnittstelle gewährleistet.

Bevorzugterweise sind die Halte- und Rastmittel so ausgestaltet, dass die Montage der Schnittstelle durch Drehbewegung derselben oder durch Verschiebebewegung derselben erfolgt, wobei diese Bewegungen im wesentlichen nur über der Grundfläche der Befestigungsplatte erfolgen, so dass diese Montage im wesentlichen nur den Raum oberhalb der Befestigungsplatte benötigt und somit durch die Installationsrohre und allenfalls neben der Befestigungsplatte vorhandenen Türzargen nicht erschwert oder verunmöglicht wird. Ebenfalls bevorzugt ist es, wenn die Montagebewegungen der Halte- bzw. Rastmittel so ermöglicht wird, dass aus verschiedenen, insbesondere zwei verschiedenen Startpositionen beim Ansetzen der zu montierenden Hausinstallationsschnittstelle an der Befestigungsplatte in die definierte Endlage gefahren werden kann, was ebenfalls die Montage bei neben der Befestigungsplatte an der Wand vorhandenen Elemente (Türzarge, Leitungen) erleichtert.

Im folgenden werden Ausführungsbeispiele der Erfindung anhand der Zeichnungen näher erläutert. Dabei zeigt
Figur 1 eine Draufsicht auf eine Befestigungsplatte einer ersten Ausführungsform;
Figur 2 einen Schnitt durch die Platte von Figur 1 entlang der Linie B-B;
Figur 3 einen Schnitt durch die Platte von Figur 1 entlang der Linie C-C;
Figur 4 eine schaubildliche Ansicht der Hausinstallationsschnittstelle und der Befestigungsplatte vor Montage;
Figur 5 eine schaubildliche Ansicht gemäss Figur 4 bei Montagebeginn;
Figur 6 eine schaubildliche Ansicht gemäss den Figuren 4 und 5 bei Montageende;
Figur 7 eine Vertikalschnittansicht durch die Befestigungsplatte und darauf montierte Schnittstelle;
Figur 8 eine schaubildliche Darstellung einer Befestigungsplatte einer weiteren Ausführungsform der Befestigungsanordnung;
Figur 9 eine Draufsicht auf die Befestigungsplatte von Figur 8;
Figur 10 eine Schnittansicht entlang der Linie A-A von Figur 9;
Figur 11 eine Schnittansicht entlang der Linie B-B von Figur 9;
Figur 12 eine Seitenansicht von Befestigungsplatte und Schnittstelle beim Start der Montage;
Figur 13 eine schaubildliche Ansicht gemäss Figur 12;
Figur 14 eine schaubildliche Ansicht der Montage;
Figur 15 eine schaubildliche Ansicht von aneinander montierter Schnittstelle und Befestigungsplatte in Endstellung; und
Figur 16 einen Schnitt durch die Montageendstellung von Figur 15.

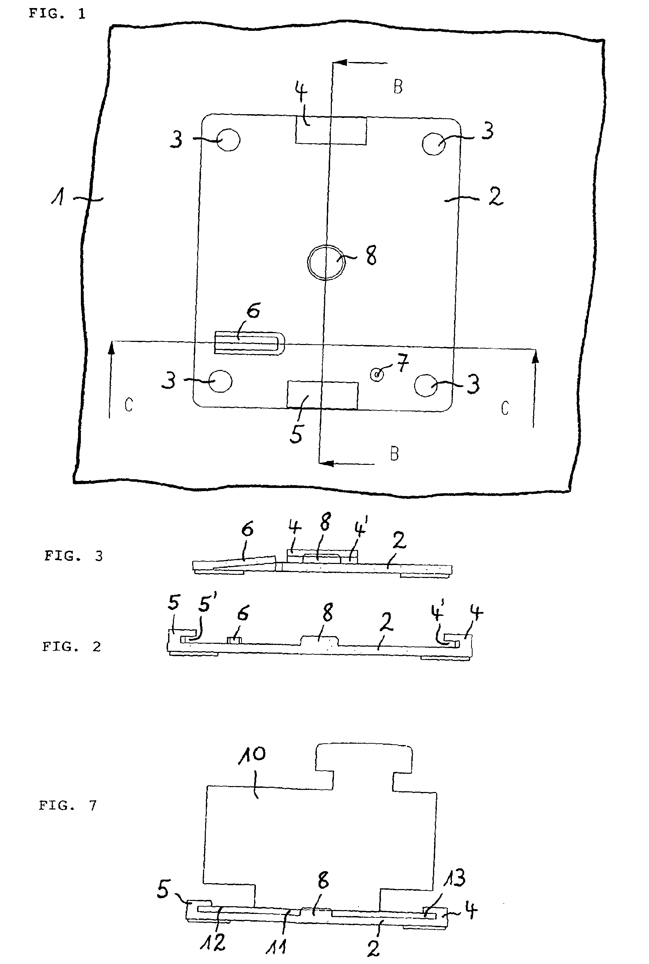

Anhand der Figuren 1 bis 7 wird nun eine erste Ausführungsform der Erfindung beschrieben, bei welcher die Montage einer Hausinstallationsschnittstelle mittels der Befestigungsanordnung erfolgt. Unter einer Hausinstallationsschnittstelle wird dabei ein elektrischer Apparat der Hausinstallation verstanden, z.B. eine Steckdose oder ein Lichtschalter. Natürlich fallen darunter auch Kombinationen solcher Apparate und auch Apparate für Telefon, TV und Radiosignale sowie Apparate, die optische Schnittstellen zur Verfügung stellen. Die Montage erfolgt dabei mittels der erfindungsgemässen Befestigungsanordnung werkzeuglos, nachdem die Befestigungsplatte auf herkömmliche Weise an einer Wand oder Decke oder am Boden eines Gebäudes befestigt worden ist. Figur 1 zeigt in diesem Sinne einen Abschnitt einer Wand 1, an welcher eine Befestigungsplatte 2 mittels nicht dargestellter Schrauben befestigt worden ist, die durch die Schraubenlöcher 3 der Befestigungsplatte 2 in die Wand geschraubt worden sind. Auf diese Weise wird die Befestigungsplatte 2 dauerhaft an der Wand befestigt. Die Befestigungsplatte 2 weist nun einerseits das Haltemittel 4, 5 auf, sowie Rastmittel 6 und 7. In den Schnittdarstellungen von Figur 2 und 3 entlang den Linien B-B bzw. C-C ist ersichtlich, dass bei dieser Ausführungsform das Haltemittel 4, 5, welches zur Unterscheidung des Haltemittels der Installationsschnittstelle auch als erstes Haltemittel bezeichnet werden kann, als zwei abgewinkelte Ausformungen 4, 5 der Befestigungsplatte ausgeführt ist, welche jeweils einen Hinterschnitt bzw. eine Nut 4' bzw. 5' aufweisen. Die Nuten 4' und 5' sind in diesem Ausführungsbeispiel jeweils auch stirnseitig offen und weisen, wie im Schnitt von Figur 2 dargestellt, einen gewölbten Nutengrund auf. Dies ist allerdings nicht zwingend und stellt nur eine bevorzugte Ausführungsform dar. Auch die Ausbildung des ersten Haltemittels als starre, mit der Befestigungsplatte 2 einstückige Abwinkelungen 4, 5 ist natürlich nur als Beispiel zu verstehen. Das Haltemittel 4, 5 könnte auch separate, an der Befestigungsplatte befestigte Teile aufweisen und diese könnten z.B. auch als flexible Federzungen ausgeführt sein, welche die Oberfläche der Befestigungsplatte beaufschlagen, was nachfolgend noch erläutert wird. Das in diesem Beispiel dargestellte Rastmittel umfasst eine federnde Zunge 6, welche in dem gezeigten Beispiel ebenfalls einstückig mit der Befestigungsplatte 2 ausgebildet ist und sich in ihrer Ruhelage über deren Oberfläche erhebt und bei Beaufschlagung in die Befestigungsplatte 2 hineindrückbar ist, wie dies im Schnitt von Figur 3 ersichtlich ist. Weiter weist das Rastmittel im gezeigten Beispiel einen starren Anschlag 7 auf, der in noch zu erläuternder Weise mit der Federzunge 6 zusammenwirkt. Bei einer anderen Ausführungsform, wie dies noch näher erläutert wird, könnte anstelle des starren Anschlages 7 eine weitere Federzunge vorgesehen sein, welche z.B. etwas oberhalb des Anschlages 7 angeordnet und ebenfalls wie die Federzunge 6 mit ihrem freien Ende zur Mittellinie der Befestigungsplatte hinweisend ausgeführt wäre. Der starre Anschlag 7 wäre dann nicht vorhanden.

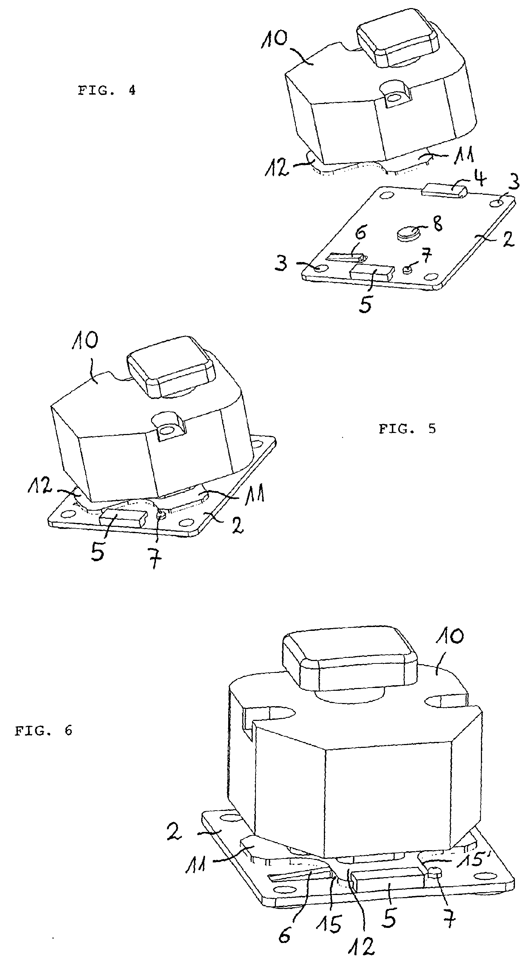

Figur 4 zeigt eine Hausinstallationsschnittstelle 10, welche in diesem Beispiel ein elektrischer Schalter, insbesondere ein Lichtschalter ist. Diese Schnittstelle 10 weist ebenfalls ein Haltemittel auf, welches zur Unterscheidung des ersten Haltemittels 4, 5 als zweites Haltemittel bezeichnet werden kann. Dieses ist zum Zusammenwirken mit dem ersten Haltemittel ausgestaltet und ist in dem gezeigten Beispiel als Platte 11 ausgeführt, welche zwei einander gegenüberliegend angeordnete Zungen 12 und 13 aufweist, wobei die Zunge 13 in der Schnittdarstellung von Figur 7 ersichtlich ist. Die Zungen 12 und 13 des zweiten Haltemittels sind zum Eingriff mit den Nuten 5' und 4' des ersten Haltemittels ausgebildet, wie dies nachfolgend ersichtlich ist. Die Ausführung des zweiten Haltemittels als vom Gehäuse der Schnittstelle 10 separate Platte, welche an dem eigentlichen Gehäuse befestigt ist, z.B. durch Verschraubung oder Klebung oder auf andere Weise, ist nur als Beispiel zu betrachten. Das zweite Befestigungsmittel könnte auch einstückig mit dem Gehäuse der Schnittstelle 10 ausgeführt sein; so könnten z.B. die Flügel 12 und 13 Teile des Gehäuses der Schnittstelle 10 sein.

Die Figur 4 zeigt die Schnittstelle 10 oberhalb der an der Wand befestigten Befestigungsplatte 2 kurz vor Beginn der eigentlichen werkzeuglosen Aufputzmontage der Schnittstelle 10 an der Wand mittels der Befestigungsanordnung. Figur 5 zeigt wie die Schnittstelle 10 in der dargestellten leicht verdrehten Position mit der Platte 11 auf die Oberfläche der Befestigungsplatte 2 positioniert worden ist, was vom Monteur von Hand erfolgt. Dabei wird die Federzunge 6 in die Befestigungsplatte 2 hineingedrückt. Aus der verdrehten Stellung von Figur 5 kann nun durch Drehung bzw. Rotation der Schnittstelle 10 im Gegenuhrzeigersinn diese an der Befestigungsplatte in die Montageendstellung verbracht werden, welche in Figur 6 gezeigt ist. Bei der Drehung der Schnittstelle 10 fahren die Flügel 12 und 13 in die Nuten 5' bzw. 4' des ersten Haltemittels ein, so dass sich dadurch ein formschlüssiges Festhalten der Schnittstelle 10 in Richtung senkrecht zur Wand ergibt. Ein leichtes Spiel der Flügel in den Nuten in senkrechter Richtung erleichtert das Einführen bei der Drehung und wird nach erfolgter Montage dadurch aufgehoben, dass in bekannter Weise über die Schnittstelle 10 ein Abdeckgehäuse montiert wird, welches sich an der Wand abstützt und welches mit Schrauben am Gehäuse 10 der Schnittstelle so befestigt wird, dass dadurch eine Zugkraft nach oben hin, von der Wand weg auf die Schnittstelle 10 erfolgt, so dass ein allfälliges Spiel zwischen den Zungen und den oberen Nutenbegrenzungen aufgehoben wird. In Figur 6 ist nun weiter ersichtlich, wie beim Erreichen der Montageendstellung das Rastmittel 6 und 7 die Fixierung der Schnittstelle 10 übernimmt, indem bei Erreichen der gewünschten Montageendstellung der Flügel 12 mit seiner Seitenfläche 15' am Anschlag 7 ansteht und der Flügel 12 dabei die Federzunge 6 freigibt, so dass diese aus der Befestigungsplatte herausfedert und einen weiteren Anschlag für die Seitenfläche 15 der Federzunge bildet. Die Schnittstelle 10 ist damit durch die ersten und zweiten Haltemittel 4, 5 bzw. 12, 13 in Richtung senkrecht zur Wand fixiert, wie dies insbesondere auch aus Figur 7 hervorgeht, und durch die Rastmittel 6 und 7 in der Montageendstellung, so dass sich eine genau definierte Lage der Schnittstelle ergibt.

Wie aus Figur 5 ersichtlich, kann dabei bevorzugterweise die Montage so erfolgen, dass die Schnittstelle von oberhalb der Befestigungsplatte 2 auf diese aufgesetzt wird, so dass kein Einfahren in die Montageposition von einer Seite her der Befestigungsplatte notwendig ist. Dies ist besonders bevorzugt, da häufig neben der Befestigungsplatte an der Wand eine Türzarge verläuft und auch die Aufputz-Leitungsrohre verlaufen, so dass ein Einfahren von einer der vier Seiten der Platte 2 her nur erschwert oder gar nicht möglich wäre, was den Einsatz der Befestigungsanordnung gemäss der Erfindung einschränken würde. Bei dem gezeigten Beispiel mit festem Anschlag 7 ist ferner die Montageposition derart vorgegeben, dass von der gezeigten schrägen Stellung her im Gegenuhrzeigersinn montiert werden muss. Wird der feste Anschlag 7 ebenfalls durch eine Federzunge ersetzt, so ist ersichtlich, dass in diesem Fall auch eine Montage erfolgen kann, wenn anstelle der Anfangsposition von Figur 5 eine um 90° im Gegenuhrzeigersinn gedrehte Anfangsposition gewählt wird. In diesem Fall wird die anstelle des festen Anschlages vorgesehene Federzunge in der Anfangsstellung hinuntergedrückt und die Federzunge 6 bleibt ausgefedert. Durch eine Drehung im Uhrzeigersinn werden dann wiederum die Flügel des zweiten Haltemittels in die Nuten des ersten Haltemittels hineingedreht, und in der Endstellung entsprechend Figur 6 bildet die Federzunge 6 den einen Anschlag und die dann wieder ausgefederte Federzunge anstelle des Anschlages 7 bildet die zweite Fixation des Rastmittels, welches in diesem Fall aus den beiden Federzungen gebildet wird.

Bevorzugt ist es weiter, wenn als Montagehilfe das Rotationszentrum vorgegeben wird, z.B. durch einen Zapfen 8 an der Befestigungsplatte und eine entsprechende Ausnehmung an der Schnittstelle 10 oder umgekehrt.

Natürlich sind verschiedene Abwandlungen des gezeigten Beispiels durchaus möglich. So kann anstelle der starren Abwinklungen 4 und 5 jeweils ein Federbügel vorgesehen werden, unter dessen Federzunge die Flügel 12 und 13 unter Aufweitung der Feder einfahrbar sind. Das Rastmittel kann andererseits auch an der Schnittstelle 10 angeordnet werden, und umfasst z.B. ebenfalls eine Federzunge, welche beim Andrücken gemäss Figur 5 in die Schnittstelle hineingedrückt wird und welche bei Erreichen der Endstellung in eine Ausnehmung der Befestigungsplatte 2 hineinfedert. Auch für diesen Fall ist eine Demontage wieder möglich, indem das Rastmittel entrastet wird, im soeben geschilderten Fall, indem diese Federzung an der Schnittstelle aus der Vertiefung ausgehebelt wird, im in den Figuren dargestellten Fall, indem die Federzunge 6 von Hand oder mittels eines Werkzeuges in die Befestigungsplatte 6 hineingedrückt wird, so dass eine Demontage durch Drehung im Uhrzeigersinn möglich wird, wodurch sich wieder die Stellung von Figur 5 ergibt, aus welcher die Schnittstelle 10 von der Befestigungsplatte abgenommen werden kann.

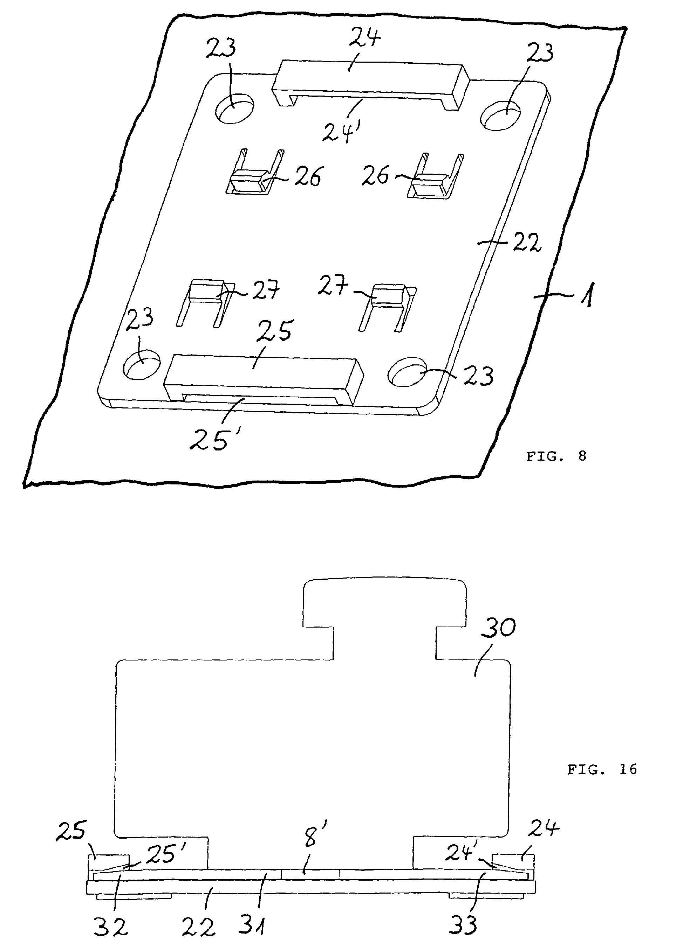

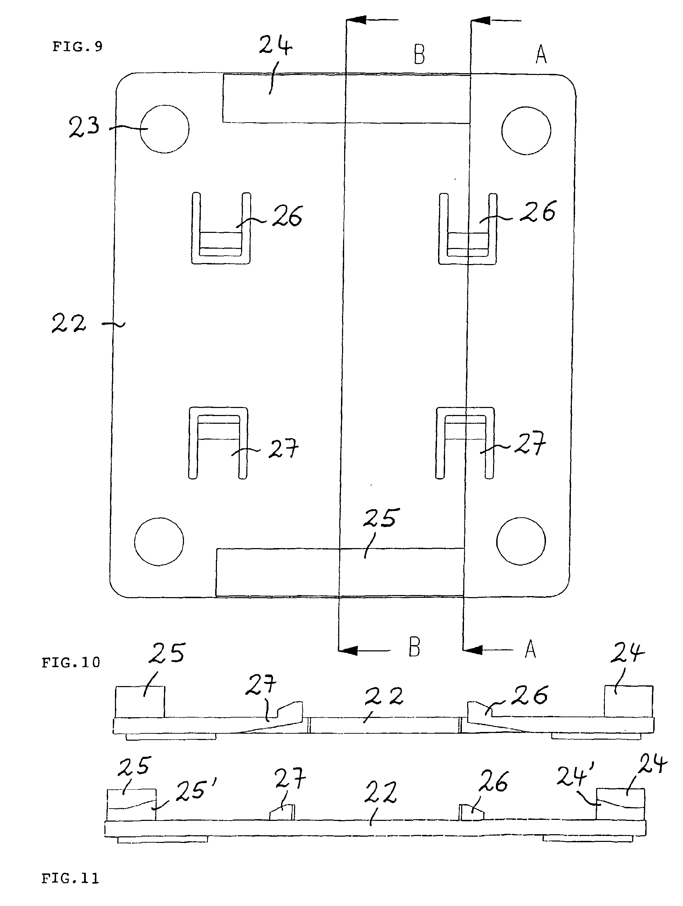

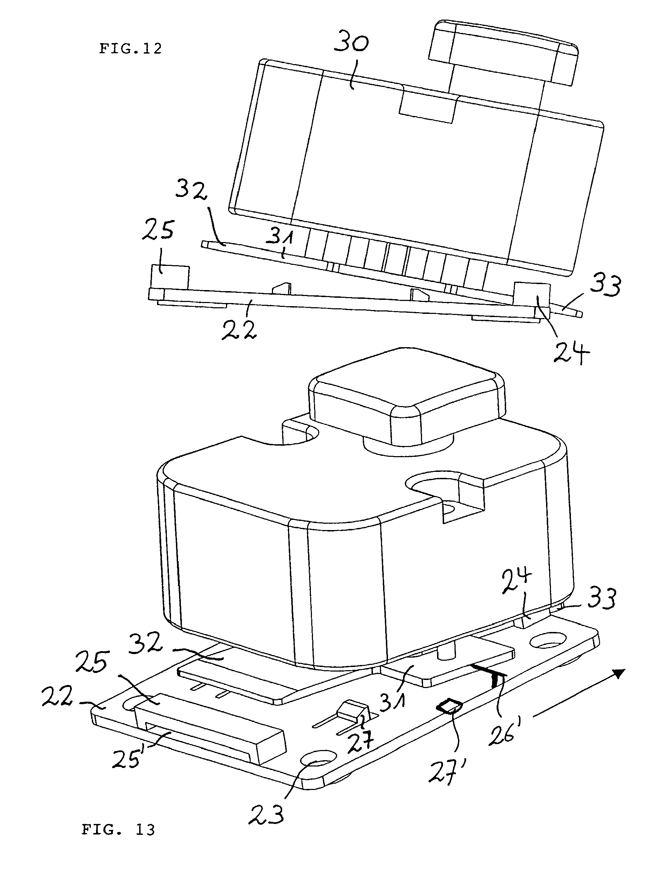

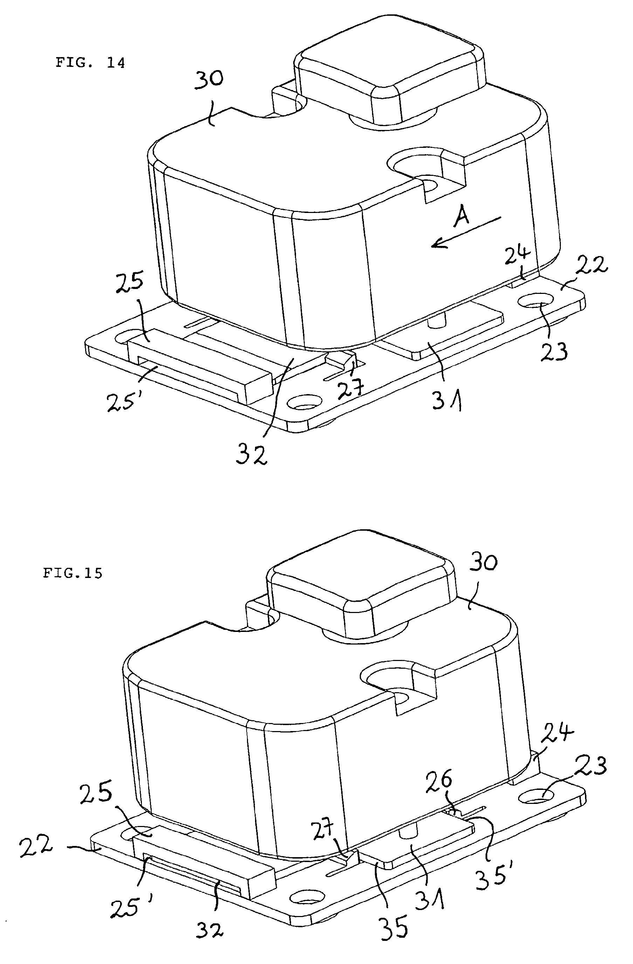

Anhand der Figuren 8-16 wird eine weitere Ausführungsform erläutert, bei welcher die ersten und zweiten Haltemittel so ausgeführt sind, dass eine Montage durch translatorische Bewegung erfolgt. Figur 8 zeigt dabei wiederum eine Befestigungsplatte 22 an einer Wand 1, wobei die Befestigung der Platte wiederum mittels Schrauben durch die Schraubenlöcher 23 hindurch an der Wand erfolgt. Das erste Haltemittel ist hierbei durch brückenartige Teile 24 und 25 gebildet, welche einstückig mit der Befestigungsplatte oder an dieser befestigt sein können. Durchgehend offene Ausnehmungen 24' und 25' werden einerseits von der Oberfläche der Platte 22 und andererseits von der Unterseite der jeweiligen Brücke 25 begrenzt und sind stirnseitig durch die Pfeiler der Brücken begrenzt. Als Rastmittel sind hier Federzungen 26 und 27 vorgesehen. Die Figuren 9, 10 und 11 zeigen eine Draufsicht auf die Befestigungsplatte von Figur 8 bzw. einen Schnitt entlang der Linie A-A bzw. B-B. Im Schnitt von Figur 11 ist die Formgebung der Ausnehmungen 24' und 25' ersichtlich, welche vorzugsweise an ihrem zur Plattenmitte hin offenen Ende gegenüber dem plattenrandseitigen Ende aufgeweitet sind. Die Figuren 12-15 zeigen nun die Montage einer Schnittstelle 30, welche ebenfalls wiederum ein Lichtschalter ist, die mit einem zweiten Haltemittel versehen ist, welches in diesem Beispiel eine Platte 31 mit Zungen 32 und 33 ist. Auch dieses Haltemittel kann wiederum einstückig mit dem Gehäuse der Schnittstelle 30 oder als separates Teil an diesem befestigt ausgeführt sein. Die Figuren 12 und 13 zeigen, wie zu Montagebeginn die Schnittstelle 30 wiederum von oben her über der Befestigungsplatte 22 plazierbar ist, wobei dies in abgewinkelter Stellung erfolgt, so dass die Zunge 33 in die Ausnehmung 24' unter der Brücke 24 eingefahren werden kann, wie dies in den Figuren 12 und 13 dargestellt ist. Die Schnittstelle 30 wird dann nach unten zur Platte 22 hinuntergedrückt, so dass die Federzungen 26, welche sich unter der Platte 31 befinden, in die Befestigungsplatte 22 hineingedrückt werden. Der Flügel 32 hingegen erstreckt sich zwischen den Federzungen 27, welche daher beim Hinunterdrücken der Schnittstelle 30 auf die Befestigungsplatte 22 weiter ausgefedert bleiben können, wie dies in Figur 14 ersichtlich ist. Die Schnittstelle 30 wird nun in Richtung des Pfeiles A verschoben, wobei die Zunge 32 in die Ausnehmung 25' einfährt. Die Verschiebung ist soweit möglich, bis die Platte 31 an den Federzungen 27, welche hier als feste Anschläge dienen, anliegt. In dieser Endstellung sind die Zungen 32 und 33 unter den Brücken 25 bzw. 24 eingefahren, was durch das erste und zweite Haltemittel ein Festhalten der Installationsschnittstelle in Richtung senkrecht zur Wand ergibt und die Federzungen 26 sind wiederum aus der Befestigungsplatte 22 ausgefahren, da sie von der Platte 31 freigegeben worden sind, wodurch sich ein Einrasten der Platte 31 zwischen den Federzungen 26 und 27 des Rastmittels in der Montageendstellung ergibt. Die Montage könnte auch von der anderen Seite her als gezeigt erfolgen, so dass durch entgegengesetzte Neigung als in Figur 12 und 13 gezeigt zunächst die Zunge 32 unter die Haltebrücke 25 eingeschoben wird und durch Hinunterdrücken der Schnittstelle 30 die Federzungen 27 in die Platte 22 hineingedrückt werden, wonach nachfolgend die Verschiebebewegung entgegen dem Pfeil A erfolgt, so dass dann die Zunge 33 unter die Brücke 24 einfährt und die Schnittstelle 30 an den Anschlägen 26 ansteht und die Federzungen 27 in der Endstellung freigegeben werden. Bei beiden Fällen bildet das Rastmittel 26, 27 an den Flächen 35 und 35' der Platte 31 die Fixierung der Montageendposition. Ein Demontieren ist wiederum durch Hinabdrücken der einen oder anderen Federzunge 26 bzw. 27 möglich. Auch in diesem Falle könnte das Rastmittel an der Schnittstelle angeordnet sein, wie dies ganz grob durch eine schematisch dargestellte Federzunge 26' an der Platte 31 und eine Vertiefung 27' in der Platte 22 in Figur 13 angedeutet ist.

Natürlich sind auch weitere Ausführungsformen ohne weiteres möglich, so z.B. der Fall, wo die eine Brücke nicht gegenüberliegend der ersten Brücke angeordnet ist, sondern im rechten Winkel an einer der Seitenwände der Befestigungsplatte 22, so dass nach dem Einfahren der Zunge 22 gemäss den Figuren 12 und 13 ein Hinunterdrücken der Schnittstelle erfolgt und nachher eine translatorische Bewegung zunächst ein Stück weit wieder in Pfeilrichtung A und danach im rechten Winkel dazu, so dass eine Zunge der Platte 31, die rechtwinklig zur Zunge 33 angeordnet ist, unter die entsprechende seitlich angeordnete Brücke 25 einfährt. Natürlich muss die Zunge 33 dann unter der Brücke 24 seitlich soviel Spiel haben, dass diese Seitwärtsbewegung ermöglicht wird. Auch bei einer solchen Ausführung sind natürlich wiederum Rastmittel vorgesehen, welche die Endstellung der Schnittstelle 30 fixieren, während die Haltemittel das Halten in Richtung senkrecht zur Wand übernehmen.

## Patentansprüche

1. Befestigungsanordnung zur Aufputzmontage einer elektrischen und/oder optischen Hausinstallationsschnittstelle (10; 30) an einer Wand (1), umfassend eine zur dauerhaften Montage an der Wand vorgesehene Befestigungsplatte (2; 22) mit ersten Haltemitteln (4, 5; 24, 25) und eine Hausinstallationsschnittstelle (10; 30) mit zum Angriff an den ersten Haltemitteln (4, 5; 24, 25) ausgebildeten zweiten Haltemitteln (12, 13; 32, 33), wobei die ersten und zweiten Haltemittel derart ausgestaltet sind, dass dadurch die montierte Hausinstallationsschnittstelle (10; 30) in Richtung senkrecht zur Wand an der Befestigungsplatte formschlüssig fixiert ist und wobei die Hausinstallationsschnittstelle werkzeuglos an der Befestigungsplatte montierbar ist, **dadurch gekennzeichnet, dass** die Befestigungsplatte (2; 22) und/oder die Hausinstallationsschnittstelle (10; 30) mindestens ein von den Haltemitteln getrenntes Rastmittel (6, 7; 26, 27; 26') aufweist, welches in der Montageendstellung der aneinander angreifenden Haltemittel an einem Anliegeteil (15, 15'; 35, 35'; 27') der Hausinstallationsschnittstelle (10; 30) bzw. der Befestigungsplatte (2; 22) anliegt, derart, dass die Montageendstellung durch das Rastmittel fixiert ist.

2. Befestigungsanordnung nach Anspruch 1, **dadurch gekennzeichnet, dass** die ersten und zweiten Haltemittel und die Rastmittel derart ausgestaltet sind, dass diese durch Rotationsbewegung der Hausinstallationsschnittstelle und/oder durch Translationsbewegung der Hausinstallationsschnittstelle in gegenseitigen Eingriff bringbar sind, wobei die Rotationsbewegung und/oder die Translationsbewegung im Wesentlichen nur über der Oberfläche der Befestigungsplatte (2; 22) ausführbar ist.

3. Befestigungsanordnung nach Anspruch 1 oder 2, **dadurch gekennzeichnet, dass** die Halte- und Rastmittel derart ausgestaltet sind, dass die Rotationsbewegung oder Translationsbewegung von zwei verschiedenen Startstellungen der Hausinstallationsschnittstelle zum Eingriff bzw. zur Fixierung bringbar sind.

4. Befestigungsanordnung nach einem der Ansprüche 1 bis 3, **dadurch gekennzeichnet, dass** die ersten und zweiten Haltemittel (4, 5 bzw. 12, 13) durch Rotationsbewegung der Hausinstallationsschnittstelle (10) in Eingriff bringbar sind, wobei eine Anordnung, vorzugsweise aus Zapfen (8) und Ausnehmung (8'), an Befestigungsplatte (2) und Hausinstallationsschnittstelle (10) das Rotationszentrum definiert.

5. Befestigungsanordnung nach einem der Ansprüche 2 bis 4, **dadurch gekennzeichnet, dass** die ersten Haltemittel von jeweils eine zum Zentrum der Befestigungsplatte (2) und stirnseitig offene Nut (4', 5') bildenden Winkelteilen (4, 5) gebildet sind, die sich jeweils über einen Teil von zwei Seitenbereichen der Befestigungsplatte erstrecken.

6. Befestigungsanordnung nach einem der Ansprüche 2 bis 5, **dadurch gekennzeichnet, dass** die Rastmittel für Rotationsmontage mindestens eine über die Befestigungsplattenoberfläche vorstehende und bündig mit dieser in die Befestigungsplatte hinunterdrückbare Federzunge (6) und einen Anschlag (7) aufweisen.

7. Befestigungsanordnung nach einem der Ansprüche 1 bis 3, **dadurch gekennzeichnet, dass** die ersten und zweiten Haltemittel (24, 25, 32, 33) durch Translationsbewegung in Eingriff bringbar sind und die ersten Haltemittel von jeweils eine durchgehende, zum Befestigungsplattenzentrum hin offene Öffnung (24', 25') bildende Haltebrücken (24, 25) gebildet sind.

8. Befestigungsanordnung nach Anspruch 7, **dadurch gekennzeichnet, dass** mindestens eine der Öffnungen (24', 25') zentrumsseitig aufgeweitet ist, derart, dass das zweite Haltemittel (32, 33) in von der Plattenoberfläche abgewinkelter Stellung in die Öffnung einführbar ist.

9. Befestigungsanordnung nach einem der Ansprüche 1 bis 3 sowie 7 oder 8, **dadurch gekennzeichnet, dass** das Rastmittel von mindestens einer von der Befestigungsplattenoberfläche abstehenden und bündig mit dieser in die Befestigungsplatte hineindrückbaren Federzunge (26, 27) und von einem Anschlag (26, 27; 25, 36) gebildet wird.

10. Befestigungsanordnung nach Anspruch 6 oder 9, **dadurch gekennzeichnet, dass** der Anschlag oder die Anschläge ebenfalls von Federzungen gebildet werden, die über die Befestigungsplattenoberfläche vorstehen und bündig mit dieser in die Befestigungsplatte hineindrückbar sind.

## Claims

1. Attachment arrangement for surface mounting of an electrical and/or optical home installation interface (10; 30) to a wall (1), comprising a mounting plate (2: 22) for the permanent mounting to the wall, with first sustaining members (4, 5; 24, 25) and a home installation interface (10; 30) with second sustaining members (12, 13; 32, 33) which are formed to grip the first sustaining members (4, 5; 24,25), wherein the first and the second sustaining members are formed in such a way, that thereby the mounted home installation interface (10; 30) is fixed in a form-fitting manner to the mounting plate in a direction perpendicular to the wall, and wherein the home installation interface is mountable to the mounting plate without usage of tools, **characterized in that** the mounting plate (2; 22) and/or the home installation interface (10; 30) has at least one engaging member (6, 7; 26, 27; 26') separated from the sustaining members, which abuts in the final mounting position of the interlocking sustaining members to an abutting member (15, 15'; 35, 35'; 27') of the home installation interface (10; 30) respectively of the mounting plate (2; 22) in such a way, that the final mounting position is fixed by the engaging member.

2. The attachment arrangement according to claim 1, **characterized in that** the first and the second sustaining members and the engaging members are formed in such a way, that they are able to be brought into mutual engagement by a rotational movement of the home installation interface and/or by a translational movement of the home installation interface, wherein the rotational movement and/or the translational movement are feasible only over the surface of the mounting plate (2; 22).

3. The attachment arrangement according to claim 1 or 2, **characterized in that** the sustaining and the engaging members are formed in such a way, that the rotational movement or the translational movement are able to be brought in the engagement respectively in the fixing from two different starting positions of the home installation interface.

4. The attachment arrangement according to one of the preceding claims, **characterized in that** the first and second sustaining members (4, 5 respectively 12, 13) are able to be brought in engagement by a rotational movement of the home installation interface (10), wherein an arrangement, preferably of a pin (8) and of an opening (8'), defines the rotational center at the mounting plate (2) and the home installation interface (10).

5. The attachment arrangement according to one of the claims 2 to 4, **characterized in that** the first sustaining members consist of corner parts (4, 5) which respectively form a single notch which is open on the front side to the center of the mounting plate (2), and which extends over a part of two side areas of the mounting plate respectively.

6. The attachment arrangement according to one of the claims 2 to 5, **characterized in that** the engaging members for rotational mounting comprise at least a spring tongue (6) which is protruding over the surface of the mounting plate and can be pushed down to be flush with the mounting plate, and a stopper (7).

7. The attachment arrangement according to claim 1 to 3, **characterized in that** the first and the second sustaining members (24, 25, 32, 33)are bringable into engagement by the translational movement and the first sustaining members consist of holding bridges (24, 25) which form a thorough opening (24', 25') which is open towards the center of the mounting plate.

8. The attachment arrangement according to claim 7, **characterized in that** at least one of the openings (24', 25') is enlarged in the center part in such a way, that the second sustaining member (32, 33) is insertable into the opening in an angled position with respect to the plate surface.

9. The attachment arrangement according to one of the claims 1 to 3 and 7 or 8, **characterized in that** the engaging member consists of at least a spring tongue (26, 27) which is sticking out of the mounting plate surface and can be pushed down to be flush with the mounting plate, and a stopper (26, 27; 25, 36).

10. The attachment arrangement according to claim 6 or 9, **characterized in that** the stopper or the stoppers equally consist of spring tabs, which stick out over the mounting plate surface and can be pushed down to be flush with the mounting plate.

## Revendications

1. Dispositif de fixation pour le montage sur crépi d'une interface (10 ; 30) d'installation domestique électrique et/ou optique sur un mur (1), comprenant une plaque (2 ; 22) de fixation qui est prévue pour le montage permanent sur le mur et qui a des premiers moyens (4, 5 ; 24, 25) de maintien et une interface (10 ; 30) d'installation domestique ayant des deuxièmes moyens (12, 13 ; 32, 33) de maintien formés pour attaquer les premiers moyens (4, 5 ; 24, 25) de maintien, les premiers et les deuxièmes moyens de maintien étant tels qu'ainsi l'interface (10 ; 30) montée d'installation domestique est immobilisée à complémentarité de forme sur la plaque de fixation dans la direction perpendiculaire au mur et dans lequel l'interface d'installation domestique peut être montée sans outil sur la plaque de fixation, **caractérisé en ce que** la plaque (2 ; 22) de fixation et/ou l'interface (10 ; 30) d'installation domestique a au moins un moyen (6, 7 ; 26, 27 ; 26') d'encliquetage qui est distinct des moyens de maintien et qui, en la position finale de montage des moyens de maintien s'attaquant l'un l'autre, s'applique à une partie (15, 15' ; 35, 35' ; 27') d'application de l'interface (10 ; 30) d'installation domestique ou de la plaque (2 ; 22) de fixation, de manière à ce que la position finale de montage soit fixée par le moyen d'encliquetage.

2. Dispositif de fixation suivant la revendication 1, **caractérisé en ce que** les premiers et deuxièmes moyens de maintien et le maintien d'encliquetage sont tels qu'ils peuvent, par un mouvement de rotation de l'interface de l'installation domestique et/ou par un mouvement de translation de l'interface d'installation domestique, être mis en prise mutuelle, le mouvement de rotation et/ou le mouvement de translation pouvant être exécuté sensiblement seulement par la surface de la plaque (2 ; 22) de fixation.

3. Dispositif de fixation suivant la revendication 1 ou 2, **caractérisé en ce que** les moyens de maintien et d'encliquetage sont tels que le mouvement de rotation ou le mouvement de translation peut, pour la prise ou pour la fixation, être apporté par deux points de départ différents de l'interface d'installation domestique.

4. Dispositif de fixation suivant l'une des revendications 1 à 3, **caractérisé en ce que** les premiers et les deuxièmes moyens (4, 5 et 12, 13) de maintien peuvent être mis en prise par un mouvement de rotation de l'interface (10) de l'installation domestique, un dispositif composé de préférence de tourillon (8) et d'évidement (8'), sur la plaque (2) de fixation et l'interface (10) d'installation domestique définissant le centre de rotation.

5. Dispositif de fixation suivant l'une des revendications 2 à 4, **caractérisé en ce que** les premiers moyens de maintien sont formés par respectivement des parties (4, 5) coudées formant une rainure (4', 5') ouverte vers le centre de la plaque (2) de fixation et du côté frontal, parties coudées qui s'étendent respectivement sur une partie de deux zones latérales de la plaque de fixation.

6. Dispositif de fixation suivant l'une des revendications 2 à 5, **caractérisé en ce que** les moyens d'encliquetage pour un montage en rotation ont au moins une butée (7) et une languette (6) élastique en saillie de la surface de la plaque de fixation et pouvant être enfoncée dans la plaque de fixation de manière à être à affleurement avec celle-ci.

7. Dispositif de fixation suivant l'une des revendications 1 à 3, **caractérisé en ce que** les premiers et les deuxièmes moyens (24, 25, 32, 33) de fixation peuvent être mis en prise par un mouvement de translation et les premiers moyens de fixation sont formés par respectivement des pontets (24, 25) de maintien formant une ouverture (24', 25') continue ouverte vers le centre de la plaque de fixation.

8. Dispositif de fixation suivant la revendication 7, **caractérisé en ce qu'**au moins l'une des ouvertures (24', 25') est élargie du côté du centre, de façon à ce que le deuxième moyen (32, 33) de maintien puisse être introduit dans l'ouverture en position coudée par la surface de la plaque.

9. Dispositif de fixation suivant l'une des revendications 1 à 3 ainsi que 7 ou 8, **caractérisé en ce que** le moyen d'encliquetage est formé par au moins une butée (26, 27 ; 25, 36) et une languette (26, 27) élastique en saillie de la surface de la plaque de fixation et pouvant être enfoncée dans la plaque de fixation de manière à venir à affleurement avec celle-ci.

10. Dispositif de fixation suivant la revendication 6 ou 9, **caractérisé en ce que** la butée ou les butées sont formées également par des languettes élastiques qui sont en saillie de la surface de la plaque de fixation et qui peuvent être enfoncées dans la plaque de fixation en venant à affleurement avec celle-ci.
